# EUROPEAN PATENT SPECIFICATION

(11) **EP 2 480 028 B1**
(45) Date of publication and mention of the grant of the patent: **02.09.2015**
(21) Application number: 10829522.1
(22) Date of filing: 09.11.2010
(51) Int. Cl.: H04W 92/04, H04W 84/04, H04W 76/02

(54) **METHOD FOR REPORTING INFORMATION REQUIRED FOR ESTABLISHING DIRECT INTERFACE BETWEEN HOME NODEBs AND HOME NODEB**
VERFAHREN ZUM ERSTATTEN VON INFORMATIONEN, DIE ZUM AUFBAU EINER DIREKTEN SCHNITTSTELLE ZWISCHEN HEIMAT-NODEBs NOTWENDIG SIND UND HEIMAT-NODEB
MÉTHODE DE TRANSMISSION DE L'INFORMATION REQUISE POUR ÉTABLIR UNE INTERFACE DIRECTE ENTRE PLUSIEURS NOEUDS B DOMESTIQUES ET NOEUD B DOMESTIQUE

(30) Priority: 11.11.2009 CN 200910224736
(43) Date of publication of application: 25.07.2012
(73) Proprietor: ZTE Corporation, Shenzhen, Guangdong 518057 (CN)
(72) Inventor: WANG, Shengming, Guangdong 518057 (CN); LI, Lanlan, Guangdong 518057 (CN)
(74) Representative: Jennings, Michael John
(86) International application number: PCT/CN2010/078569
(87) International publication number: WO 2011/057558

(56) References cited:
- EP-A1- 2 093 975
- WO-A1-2009/066337
- WO-A1-2009/080601
- CN-A- 101 043 473
- "3rd Generation Partnership Project;Technical Specification Group Radio Access Network;Home (e)NodeB;Network aspects(Release 8)", 3GPP DRAFT; R3.020_V090_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080818, 3 September 2008 (2008-09-03), XP050423676, [retrieved on 2008-09-03]

## Description

### Filed of the Invention

The present invention relates to the communication field, in particular to a method for reporting the information required for establishing a direct interface between home NodeBs, and a home NodeB.

### Background of the Invention

Home NodeB is a minitype base station with low power, see for example, 3GPP TR R3.020 v0.9.0 (2008-09), is mainly deployed in indoor places such as home, office and so on, and has the functions of providing a user with higher service rate, reducing the expenses required for using high rate services, and simultaneously covering the shortage of existing distributed cellular wireless communication system. The home NodeB has the advantages of material benefit, convenience, low power output, and plug-and-play and so on.

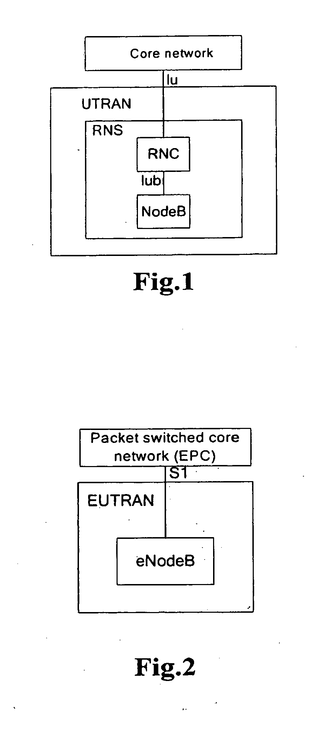

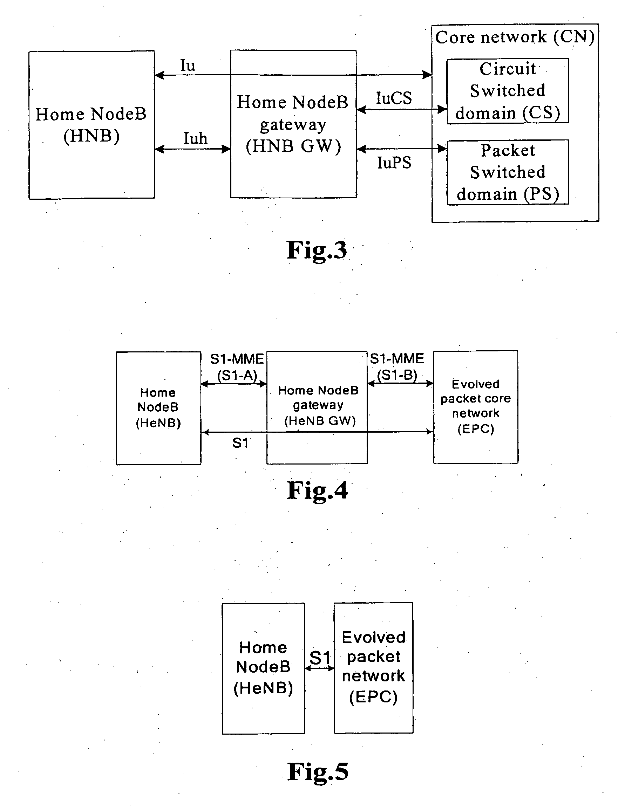

According to different interfaces provided, the home NodeB can be accessed into a 3G or long term evolution (LTE) network architecture. The application is suitable for both 3G and LTE home NodeBs. Fig.1 is a 3G network architecture diagram according to correlated technology. As shown in Fig.1, in the 3G network architecture, the base station is connected with a core network through an Iu interface. Fig.2 is an LTE network architecture diagram according to correlated technology. As shown in Fig.2, in the LTE network architecture, the base station is connected with the core network through an S1 interface. In order to manage the home NodeB conveniently and reduce the influence on the core network (CN), a home NodeB system wireless access network imports a Home (evolved) NodeB Gateway (H(e)NB GW for short). Fig.3 is a 3G home NodeB network architecture diagram according to correlated technology. As shown in Fig.3, the HNB GW is connected with the CN; 3G HNB is connected with the HNB GW; the interface between the wireless access network and the CN is an Iu interface which is the same as the interface between a macro base station and the CN. Fig.4 and Fig.5 are LTE home NodeB network architecture diagrams according to correlated technology. The home NodeB can be connected with the CN in two ways. As shown in Fig.4, in the LTE home network architecture, the home NodeB can be connected with the CN through the home NodeB gateway; the HeNB GW is connected with the CN; HeNB is connected with the HeNB GW. The interfaces between the HeNB GW and the HeNB, and between the HeNB GW and the CN are both called as S1-MME interface. For distinguish, the two interfaces can be respectively called as S1-A interface and S1-B interface. As shown in Fig.5, in the LTE home NodeB network architecture, the home NodeB can be connected with the CN directly.

Closed subscriber group (CSG) is a concept for the home NodeB proposed by the 3rd-Generation Partnership Project (3GPP) standard organization. CSG is a logical concept. Generally speaking, a family or an enterprise can form a CSG. One CSG can comprise one or a plurality of home NodeBs, and each CSG has an exclusive identification.

The home NodeB can provide the terminal UE and the macro base station with consistent services, and can provide the terminal UE with mobile management entity to realize the bidirectional switching between the macro cell and the home NodeB and between the home NodeBs. The direct interface between the base stations is not defmed in existing home NodeB network architecture. In home environment, one home NodeB is generally deployed so that the user switching will occur between the home NodeB and the macro base station. In enterprise environment, a plurality of home NodeBs are generally deployed, and these home NodeBs generally belong to a same CSG. The user moves between these home NodeBs frequently, so the bidirectional switching also needs to be achieved between the home NodeBs. If no direct interface exists between the home NodeBs, the user plane data and control plane data during the switching will be all forwarded through the home NodeB gateway or the CN, which causes that the home NodeB gateway and the core network element take a great load, the time delay is comparatively long when the user plane data and the control plane data are transmitted between base stations, and the routing algorithm of the data package transmission in the network is comparatively complex. One solution is to establish a direct interface between the base stations, so that partial signaling and user plane data can be directly transmitted between the home NodeBs through the direct interfaces. However, not every home NodeB has the function of establishing direct interfaces with adjacent home NodeBs, and not every home NodeB is suitable to establish direct interfaces with adjacent home NodeBs. When two adjacent home NodeBs do not belong to a same CSG, the access control process of the CN will be activated when the user switches between the home NodeBs, with the result that the signaling transmission load in the network is not reduced. Under this circumstance, the existing S1/Iu interface switching flow is suitable, and the establishment of the direct interface between the home NodeBs is unnecessary. For the LET macro base station network architecture, the macro base station transmits a transmission layer address required for establishing the direct interface between macro base stations to the mobile management entity (MME) which is a network element of the core network, through a "base station configuration transmission message". However, the method to establish the direct interface between macro base stations is not completely suitable for the home NodeBs, because the direct interface is not suitable to be established between the home NodeBs under some application scenes. Furthermore, the method to establish the direct interface between macro base stations in prior art is only discussed in the LTE architecture, but not suitable for the 3G HNB. In prior art, no exact method to establish the direct interface between the home NodeBs exists, and there is no clear method of how to establish the logic connection of the direct interface when no physical connection exists between the home NodeBs. One possible solution to establish the direct interface between the home NodeBs is as follows: a source home NodeB requests for establishing the direct interface; the request message is forwarded to a target home NodeB through the home NodeB gateway or the MME which is a network element of the core network; if the home NodeB gateway or the MME which is a network element of the core network learns that the target home NodeB does not have the direct interface ability, the message will be terminated. However, the home NodeB gateway or the MME which is a network element of the core network in prior art can not acquire the above-mentioned information of the home NodeB. Therefore, great limitations exist in prior art.

No effective solution is proposed yet at present aiming at the problem in prior art that the home NodeB gateway or the core network element MME can not acquire the information required for establishing the direct interface between the home NodeBs.

### Summary of the Present Invention

The present invention is provided aiming at the problem in prior art that the home NodeB gateway or the core network element MME can not acquire the information required for establishing the direct interface between the home NodeBs. For this reason, the present invention mainly aims to provide a method for reporting the information required for establishing the direct interface between the home NodeBs, and the home NodeB to solve the above-mentioned problem.

In order to achieve the above-mentioned aim, the present invention provides a method for reporting the information required for establishing the direct interface between the home NodeBs according to one aspect of the present invention.

The method for reporting the information required for establishing the direct interface between the home NodeBs according to the present invention comprises: establishing a stream control transmission protocol (SCTP) connection between a home NodeB and a home NodeB gateway or a mobile management entity (MME) which is a network element of a core network; and reporting, by the home NodeB through the SCTP connection, the information required for establishing the direct interface between the home NodeBs.

Preferably, the step of reporting, by the home NodeB through the SCTP connection, the information required for establishing the direct interface between the home NodeBs comprises: when the home NodeB is a 3rd generation mobile communication system 3G home NodeB, reporting by the home NodeB the information required for establishing the direct interface between the home NodeBs to the home NodeB gateway through an Iuh interface signaling between the home NodeB and the home NodeB gateway.

Preferably, the step of reporting, by the home NodeB through the SCTP connection, the information required for establishing the direct interface between the home NodeBs comprises: when the home NodeB is a long term evolution system (LTE) home NodeB which is deployed with a home NodeB gateway, reporting by the LTE home NodeB the information required for establishing the direct interface between the LTE home NodeBs to a LTE home NodeB gateway through an S 1 interface signaling in the LTE home NodeB network architecture.

Preferably, the step of reporting, by the home NodeB through the SCTP connection, the information required for establishing the direct interface between the home NodeBs comprises: when the home NodeB is a LTE home NodeB which is not deployed with a home NodeB gateway, reporting by the LTE home NodeB the information required for establishing the direct interface between the LTE home NodeBs to the MME which is a network element of a core network through an S1 interface signaling of the LTE home NodeB.

Preferably, the information required for establishing the direct interface between the home NodeBs comprises at least one of the following: ability information for establishing the direct interface between the home NodeBs, and transmission layer address information for establishing the direct interface between the home NodeBs.

In order to achieve the above-mentioned aim, the present invention provides a home NodeB according to another aspect of the present invention.

The home NodeB according to the present invention comprises: an establishment module, configured to establish a stream control transmission protocol (SCTP) connection between the home NodeB and a home NodeB gateway or a mobile management entity (MME) which is a network element of a core network; and a report module, configured to report the information required for establishing a direct interface between the home NodeBs through the SCTP connection established by the establishment module.

Preferably, the report module comprises: a first report submodule, configured to report the information required for establishing the direct interface between the home NodeBs to the home NodeB gateway through an Iuh interface signaling between the home NodeB and the home NodeB gateway when the home NodeB is the 3rd generation mobile communication system 3G home NodeB.

Preferably, the report module also comprises: a second report submodule, configured to report the information required for establishing the direct interface between the long term evolution system (LTE) home NodeBs to the LTE home NodeB gateway through an S 1 interface signaling in the LTE home NodeB network architecture when the home NodeB is the LTE home NodeB which is deployed with a home NodeB gateway.

Preferably, the report module also comprises: a third report submodule, configured to report the information required for establishing the direct interface between the LTE home NodeBs to the MME which is a network element of a core network through an S1 interface signaling of the LTE home NodeB when the home NodeB is the LTE home NodeB which is not deployed with a home NodeB gateway.

Preferably, the information required for establishing the direct interface between the home NodeBs comprises at least one of the following: ability information for establishing the direct interface between the home NodeBs, and transmission layer address information for establishing the direct interface between the home NodeBs.

In virtue of the present invention, in the home NodeB network architecture, after the SCTP connection between the home NodeB and the home NodeB gateway or the MME which is a network element of the core network is established, the home NodeB reports the information required for establishing the direct interface between the home NodeBs to the home NodeB gateway or the MME which is a network element of the core network. The present invention solves the problem that the home NodeB gateway or the core network element MME can not acquire the information required for establishing the direct interface between the home NodeBs, achieves the aim that the home NodeB gateway or the MME which is a network element of the core network can acquire the information required for establishing the direct interface between the home NodeBs, and achieves the effect of reducing the signaling transmission load in the network caused when the user performs switching between the home NodeBs.

### Brief Description of the Drawings

The drawings in the specification provide a further understanding to the present invention and constitute a part of the application. The exemplary embodiments of the present invention and the explanation thereof are given thereafter by way of illustration only, and thus are not limitative of the present invention, and wherein:
Fig.1 is a 3G network architecture diagram according to correlated technology;
Fig.2 is an LTE network architecture diagram according to correlated technology;
Fig.3 is a 3G home NodeB network architecture diagram according to correlated technology;
Fig.4 is an LTE home NodeB network architecture diagrams according to correlated technology when the home NodeB gateway is deployed;
Fig.5 is an LTE home NodeB network architecture diagrams according to correlated technology when the home NodeB gateway is not deployed;
Fig.6 is a flowchart of the method for reporting the information required for establishing the direct interface between the home NodeBs according to the embodiments of the present invention;
Fig.7 is a flowchart of the method according to the first embodiment of the present invention;
Fig.8 is a flowchart of the method according to the second embodiment of the present invention;
Fig.9 is a flowchart of the method according to the third embodiment of the present invention;
Fig.10 is a flowchart of the method according to the fourth embodiment of the present invention;
Fig.11 is a flowchart of the method according to the fifth embodiment of the present invention;
Fig.12 is a flowchart of the method according to the sixth embodiment of the present invention;
Fig.13 is a structural diagram of the home NodeB according to the embodiments of the present invention;
Fig.14 is a preferable structural diagram of the home NodeB according to the embodiments of the present invention.

### Detailed Description

With consideration to the problem that the home NodeB gateway or the core network element MME can not acquire the information required for establishing the direct interface between the home NodeBs, the embodiments of the present invention provide a method for reporting the information required for establishing the direct interface between the home NodeBs, and the home NodeB. After the SCTP connection between the home NodeB and the home NodeB gateway or the core network element MME is established, the home NodeB reports the information required for establishing the direct interface between the home NodeBs through the SCTP connection. The present invention achieves the aim that the home NodeB gateway or the core network element MME can acquire the information required for establishing the direct interface between the home NodeBs, and achieves the effect of reducing the signaling transmission load in the network caused when the user performs switching between the home NodeBs.

What should be explained is that if un-conflictive, the examples of the present invention can be inter-combined with the characteristics in the examples. The present invention will be detailed hereinafter with reference to the drawings and in connection with the examples.

The present invention provides a method for reporting the information required for establishing the direct interface between the home NodeBs according to the examples of the present invention.

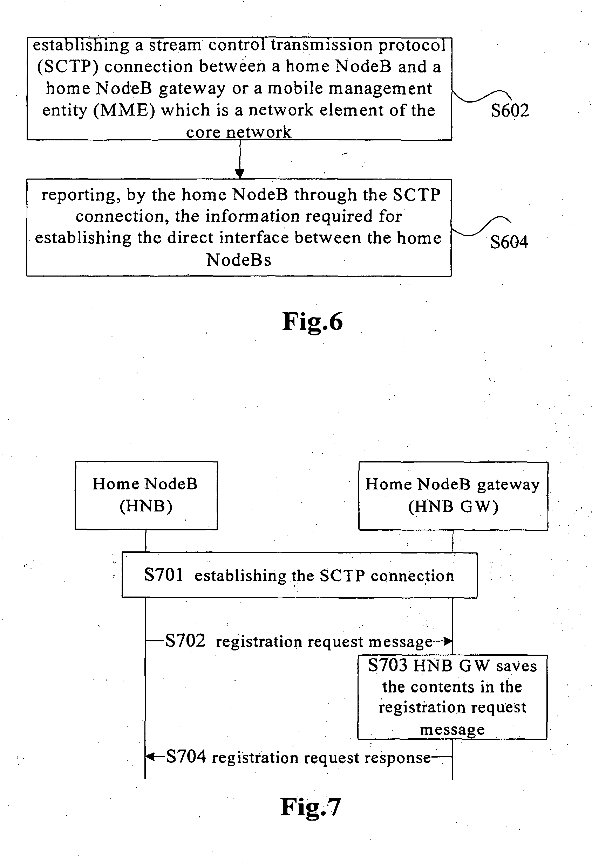

Fig.6 is a flowchart of the method for reporting the information required for establishing the direct interface between the home NodeBs according to the examples of the present invention. As shown in Fig.6, the method comprises the steps S602-S604 as follows:
S602, establishing the stream control transmission protocol (SCTP) connection between the home NodeB and the home NodeB gateway or the core network element MME;
S604, reporting (upwardly reporting), by the home NodeB through the SCTP connection, the information required for establishing the direct interface between the home NodeBs.

Concretely, aiming at the 3G home NodeB, after the SCTP connection is established between the home NodeB and the home NodeB gateway, the information required for establishing the direct interface between the home NodeBs is reported to the home NodeB gateway through the Iuh interface signaling between the home NodeB and the home NodeB gateway.

Concretely, aiming at the LTE home NodeB network architecture which is deployed with the home NodeB gateway, after the SCTP connection is established between the home NodeB and the home NodeB gateway, the information required for establishing the direct interface between the home NodeBs is reported to the home NodeB gateway through the S 1 interface signaling in the home NodeB network architecture.

Concretely, aiming at the LTE home NodeB network architecture which is not deployed with the home NodeB gateway, after the SCTP connection is established between the home NodeB and the MME which is a network element of the core network, the information required for establishing the direct interface between the home NodeBs is reported to the MME which is a network element of the core network through the S1 interface signaling of the home NodeB.

In the above, the information required for establishing the direct interface between the home NodeBs comprises a plurality of contents, such as necessarily comprising the ability information whether the home NodeB can establish the direct interface between the home NodeBs, and optionally comprising the other contents such as the transmission layer address required for establishing the direct interface between the home NodeBs.

The implementation process of the examples of the present invention will be detailed hereinafter in connection with the examples.

### The first example

The first embodiment is adequate for the 3G HNB network architecture where the HNB is connected with the CN through the HNB GW.

Fig.7 is a flowchart of the method according to the first example of the present invention. As shown in Fig.7, the method comprises the steps S701-S704 as follows:
S701, the SCTP connection is established between the source HNB and the home NodeB gateway;
S702, the source HNB sends a registration message to the home NodeB gateway, wherein the message carries the information required for establishing the direct interface between the home NodeBs;
S703, if the HNB GW accepts the registration request of the HNB, then the HNB GW will save the contents carried in the registration request message, wherein these contents comprise the ability information of establishing the direct interface by the home NodeB;
S704, the HNB GW sends a registration request response to the HNB, wherein the registration request response message carries the RNC-ID of the HNB GW.

### The second example

The second example is adequate for the 3G HNB network architecture where the HNB is connected with the CN through the HNB GW. An Iuh interface message is newly added in the second example, wherein this message is used for transmitting the information required for establishing the direct interface between the home NodeBs, and can be named as HNB configuration message.

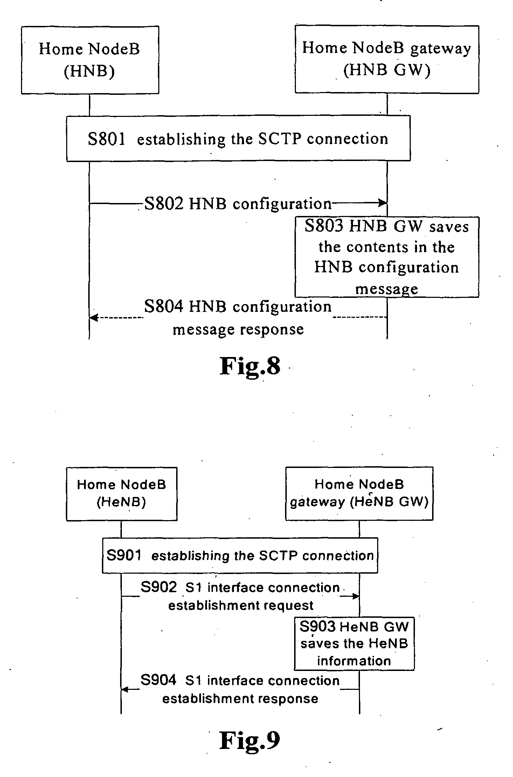

Fig.8 is a flowchart of the method according to the second embodiment of the present invention. As shown in Fig.8, the method comprises the steps S801-S804 as follows:
S801, the SCTP connection is established between the source HNB and the home NodeB gateway;
S802, the source HNB sends the HNB configuration message to the home NodeB gateway, wherein the message carries the information required for establishing the direct interface between the home NodeBs;
S803, the HNB GW saves the contents carried in the HNB configuration message;
S804, optionally, the HNB GW sends an HNB configuration message response to the HNB.

### The third example

The third example is adequate for the network architecture where the LTE HeNB is connected with the CN through the HeNB GW. Concretely, the home NodeB reports the information required for establishing the direct interface between the home NodeBs to the home NodeB gateway.

Fig.9 is a flowchart of the method according to the third example of the present invention. As shown in Fig.9, the method comprises the steps S901-S904 as follows:
S901, the SCTP connection is established between the source HeNB and the home NodeB gateway;
S902, the source HeNB sends an S 1 interface establishment request message to the home NodeB gateway, wherein the message carries the information required for establishing the direct interface between the home NodeBs, and the information comprises the ability information of establishing the interface between the base stations by the home NodeB, and can also optionally comprise the transmission layer address information required for establishing the direct interface and so on;
S903, the HeNB GW saves the contents carried in the S1 interface establishment request message;
S904, the HeNB GW sends an S 1 interface establishment request response message to the HNB.

### The fourth example

The fourth example is adequate for the network architecture where the LTE HeNB is connected with the CN through the HeNB GW. Concretely, the home NodeB reports the information required for establishing the direct interface between the home NodeBs to the home NodeB gateway.

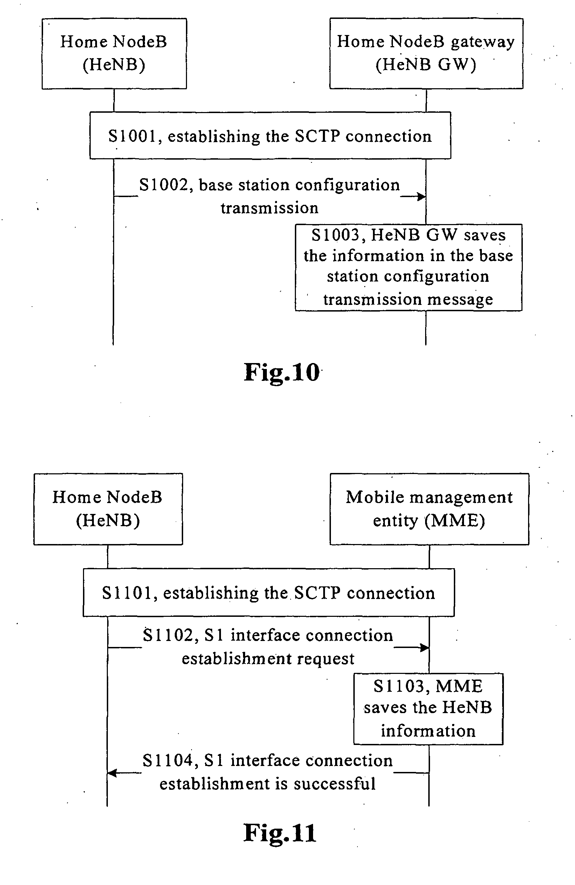

Fig.10 is a flowchart of the method according to the fourth example of the present invention. As shown in Fig. 10, the method comprises the steps S1001-S1003 as follows:
S1001, the SCTP connection is established between the source HeNB and the home NodeB gateway;
S1002, the source HeNB sends a base station configuration transmission request message to the home NodeB gateway, wherein the message carries the information required for establishing the direct interface between the home NodeBs, and the information comprises the ability information of establishing the direct interface between the base stations by the home NodeB, and the transmission layer address information and so on;
S1003, the HeNB GW saves the contents carried in the base station configuration transmission request message;

### The fifth example

The fifth embodiment is adequate for the network architecture where the LTE HeNB is connected with the CN directly.

Fig. 11 is a flowchart of the method according to the fifth example of the present invention. As shown in Fig. 11, the method comprises the steps S1101-S1014 as follows:
S1101, the SCTP connection is established between the source HeNB and the MME which is a network element of the core network;
S 1102, the source HeNB sends the S 1 interface establishment request message to the MME which is a network element of the core network, wherein the source HeNB makes the message carry the information required for establishing the direct interface between the home NodeBs, and the information comprises the ability information of establishing the interface between the base stations by the home NodeB, and can also optionally comprise the transmission layer address information of the direct interface and so on;
S1103, the MME which is a network element of the core network saves the contents carried in the S 1 interface establishment request message;
S1104, the MME which is a network element of the core network sends the S1 interface establishment request response message to the source HeNB.

### The sixth example

The sixth example is adequate for the network architecture where the LTE HeNB is connected with the CN directly. Concretely, the home NodeB reports the information required for establishing the direct interface between the home NodeBs to the MME which is a network element of the core network.

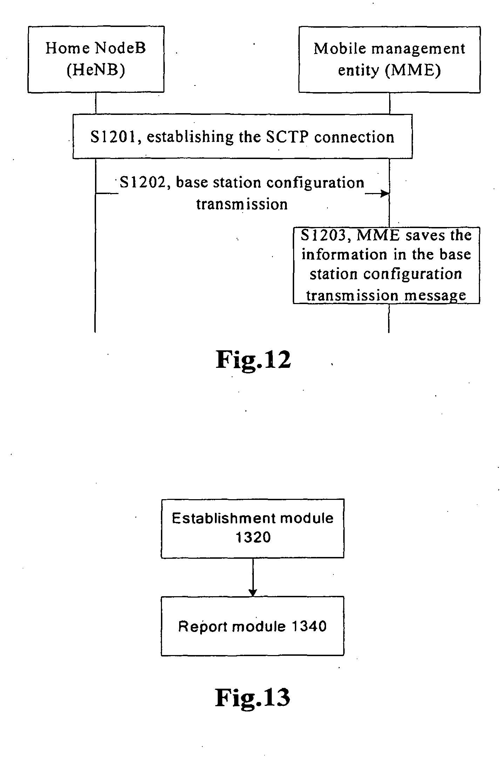

Fig.12 is a flowchart of the method according to the sixth example of the present invention. As shown in Fig. 12, the method comprises the steps S1201-S1203 as follows:
S1201, the SCTP connection is established between the source HeNB and the home NodeB gateway;
S1202, the source HeNB sends a base station configuration transmission message to the home NodeB gateway, wherein the message carries the information required for establishing the direct interface between the home NodeBs, and the information comprises the ability information of establishing the interface between the base stations by the home NodeB, and optionally comprises the transmission layer address information of the direct interface and so on;
S1203, the HeNB GW saves the contents carried in the base station configuration transmission message.

What needs to be explained is that the steps shown in the flowcharts of the attached drawings can be executed in a group of computers, such as a computer system capable of executing commands. Furthermore, although the flowcharts show the logic sequence of the steps, the steps shown or described in the flowcharts can be executed by the sequences different from the above-mentioned logic sequence.

The present invention provides a home NodeB according to the examples of the present invention.

Fig.13 is a structural diagram of the home NodeB according to the examples of the present invention. As shown in Fig.13, the home NodeB comprises an establishment module 1320 and a report module 1340 which will be detailed hereafter:

The establishment module 1320 is used for establishing the stream control transmission protocol (SCTP) connection between the home NodeB and the home NodeB gateway or the mobile management entity (MME) which is a network element of the core network; and the report module 1340, which is connected with the establishment module 1320, is used for reporting the information required for establishing the direct interface between the home NodeBs through the SCTP connection established by the establishment module.

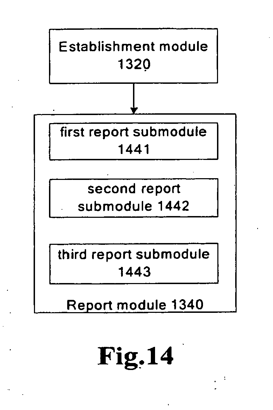

Fig.14 is a preferable structural diagram of the home NodeB according to the examples of the present invention. As shown in Fig.14, the report module comprises a first report submodule 1441, a second report submodule 1442 and a third report submodule 1443 which will be detailed hereafter:

The first report submodule 1441 is used for reporting the information required for establishing the direct interface to the home NodeB gateway through the Iuh interface signaling between the home NodeB and the home NodeB gateway when the home NodeB is the 3rd generation mobile communication system 3G home NodeB; the second report submodule 1442 is used for reporting the information required for establishing the direct interface between the LTE home NodeBs to the LTE home NodeB gateway through the S1 interface signaling in the LTE home NodeB network architecture when the home NodeB is the long term evolution system (LTE) home NodeB which is deployed with the home NodeB gateway; the third report submodule 1443 is used for reporting the information required for establishing the direct interface between the LTE home NodeBs to the MME which is a network element of the core network through the S 1 interface signaling of the LTE home NodeB when the home NodeB is the long term evolution system (LTE) home NodeB which is not deployed with the home NodeB gateway.

Concretely, the above-mentioned report submodules are respectively selected in different systems.

What needs to be explained is that the home NodeB described in the device example is corresponding to the method example, and the specific implementation process thereof has been detailed in the method example, so that unnecessary details will not be given here any more.

In virtue of the present invention, the aim that the home NodeB gateway or the MME which is a network element of the core network acquires the information required for establishing the direct interface between the home NodeBs is achieved, and the effect of reducing the signaling transmission load in the network caused when the user performs switching between the home NodeBs is achieved.

Obviously, those skilled in the art shall understand that the above-mentioned modules or steps of the present invention can be realized by using general purpose calculating device, can be integrated in one calculating device or distributed on a network which consists of a plurality of calculating devices. Alternatively, the modules or the steps of the present invention can be realized by using the executable program code of the calculating device. Consequently, the modules or the steps can be stored in the storage device and executed by the calculating device, or the modules or the steps are made into integrated circuit module respectively, or a plurality of modules or steps thereof are made into one integrated circuit module. In this way, the present invention is not restricted to any particular hardware and software combination.

The descriptions above are only preferable embodiments of the present invention, which are not used to restrict the present invention. For those skilled in the art, the present invention may have various changes and variations. Any amendments, equivalent substitutions, improvements etc. within the principle of the present invention are all concluded in the protection scope of the present invention.

## Claims

1. A method for reporting information required for establishing a direct interface between home NodeBs, wherein comprising:
establishing S602 a stream control transmission protocol, SCTP, connection between a home NodeB and a home NodeB gateway or a mobile management entity, MME, which is a network element of a core network; and
reporting S604, by the home NodeB through the SCTP connection, the information required for establishing the direct interface between the home NodeBs.

2. The method according to Claim 1, wherein the step of reporting, by the home NodeB through the SCTP connection, the information required for establishing the direct interface between the home NodeBs comprises:
when the home NodeB is a 3rd generation mobile communication system 3G home NodeB, reporting by the home NodeB the information required for establishing the direct interface between the home NodeBs to the home NodeB gateway through a signaling on an luh interface between the home NodeB and the home NodeB gateway.

3. The method according to Claim 1, wherein the step of reporting, by the home NodeB through the SCTP connection, the information required for establishing the direct interface between the home NodeBs comprises:
when the home NodeB is a long term evolution system, LTE, home NodeB which is deployed with a home NodeB gateway, reporting by the LTE home NodeB the information required for establishing the direct interface between the LTE home NodeBs to an LTE home NodeB gateway through a signaling on an S1 interface in the LTE home NodeB network architecture.

4. The method according to Claim 1, wherein the step of reporting, by the home NodeB through the SCTP connection, the information required for establishing the direct interface between the home NodeBs comprises:
when the home NodeB is an LTE home NodeB which is deployed without a home NodeB gateway, reporting by the LTE home NodeB the information required for establishing the direct interface between the LTE home NodeBs to the MME which is a network element of a core network through a signaling on an S1 interface of the LTE home NodeB.

5. The method according to any one of Claims 1-4, wherein the information required for establishing the direct interface between the home NodeBs comprises at least one of the following:
ability information for establishing the direct interface between the home NodeBs, and transmission layer address information for establishing the direct interface between the home NodeBs.

6. A home NodeB, comprising:
an establishment module (1320), configured to establish a stream control transmission protocol, SCTP, connection between the home NodeB and a home NodeB gateway or a mobile management entity, MME, which is a network element of a core network; and
a report module (1340), configured to report the information required for establishing a direct interface between the home NodeBs through the SCTP connection established by the establishment module.

7. The home NodeB according to Claim 6, the report module comprises:
a first report submodule (1441), configured to report the information required for establishing the direct interface between the home NodeBs to the home NodeB gateway through a signaling on an luh interface between the home NodeB and the home NodeB gateway when the home NodeB is a 3rd generation mobile communication system 3G home NodeB.

8. The home NodeB according to Claim 6, the report module comprises:
a second report submodule (1442), configured to report the information required for establishing the direct interface between the long term evolution system, LTE, home NodeBs to the LTE home NodeB gateway through a signaling on an S1 interface in the LTE home NodeB network architecture when the home NodeB is an LTE home NodeB which is deployed with a home NodeB gateway.

9. The home NodeB according to Claim 6, wherein the report module comprises:
a third report submodule (1443), configured to report the information required for establishing the direct interface between the LTE home NodeBs to the MME which is a network element of a core network through a signaling on an S1 interface of the LTE home NodeB when the home NodeB is an LTE home NodeB which is deployed without a home NodeB gateway.

10. The home NodeB according to any one of Claims 6-9, wherein the information required for establishing the direct interface between the home NodeBs comprises at least one of the following:
ability information for establishing the direct interface between the home NodeBs, and transmission layer address information for establishing the direct interface between the home NodeBs.

## Patentansprüche

1. Verfahren zum Erstatten von Informationen, die zum Aufbauen einer direkten Schnittstelle zwischen Heimat-NodeBs notwendig sind, beinhaltend:
Aufbauen S602 einer Stream-Control-Transmission-Protokoll-, SCTP-, Verbindung zwischen einem Heimat-NodeB und einem Heimat-NodeB-Gateway oder einer Mobilmanagementeinheit, MME, die ein Netzwerkelement eines Kernnetzwerks ist; und
Erstatten S604, durch das Heimat-NodeB über die SCTP-Verbindung, der Informationen, die zum Aufbauen einer direkten Schnittstelle zwischen den Heimat-NodeBs notwendig sind.

2. Verfahren gemäß Anspruch 1, wobei der Schritt des Erstattens, durch das Heimat-NodeB über die SCTP-Verbindung, der Informationen, die zum Aufbauen der direkten Schnittstelle zwischen den Heimat-NodeBs notwendig sind, Folgendes beinhaltet:
wenn das Heimat-NodeB ein Mobilkommunikationssystem-3G-Heimat-NodeB der dritten Generation ist, Erstatten durch das Heimat-NodeB der Informationen, die zum Aufbauen der direkten Schnittstelle zwischen den Heimat-NodeBs notwendig sind, an das Heimat-NodeB-Gateway über eine Signalisierung an einer Iuh-Schnittstelle zwischen dem Heimat-NodeB und dem Heimat-NodeB-Gateway.

3. Verfahren gemäß Anspruch 1, wobei der Schritt des Erstattens, durch das Heimat-NodeB über die SCTP-Verbindung, der Informationen, die zum Aufbauen der direkten Schnittstelle zwischen den Heimat-NodeBs notwendig sind, Folgendes beinhaltet:
wenn das Heimat-NodeB ein Long-Term-Evolution-System-, LTE-, Heimat-NodeB ist, das mit einem Heimat-NodeB-Gateway eingesetzt wird, Erstatten durch das LTE-Heimat-NodeB der Informationen, die zum Aufbauen der direkten Schnittstelle zwischen den LTE-Heimat-NodeBs notwendig sind, an ein LTE-Heimat-NodeB-Gateway über eine Signalisierung an einer Sl-Schnittstelle in der LTE-Heimat-NodeB-Netzwerkarchitektur.

4. Verfahren gemäß Anspruch 1, wobei der Schritt des Erstattens, durch das Heimat-NodeB über die SCTP-Verbindung, der Informationen, die zum Aufbauen der direkten Schnittstelle zwischen den Heimat-NodeBs notwendig sind, Folgendes beinhaltet:
wenn das Heimat-NodeB ein LTE-Heimat-NodeB ist, das ohne einem Heimat-NodeB-Gateway eingesetzt wird, Erstatten durch das LTE-Heimat-NodeB der Informationen, die zum Aufbauen der direkten Schnittstelle zwischen den LTE-Heimat-NodeBs notwendig sind, an die MME, die ein Netzwerkelement eines Kernnetzwerks ist, über eine Signalisierung an einer Sl-Schnittstelle des LTE-Heimat-NodeB.

5. Verfahren gemäß einem der Ansprüche 1-4, wobei die Informationen, die zum Aufbauen der direkten Schnittstelle zwischen den Heimat-NodeBs notwendig sind, mindestens eines der Folgenden beinhaltet:
Fähigkeitsinformationen zum Aufbauen der direkten Schnittstelle zwischen den Heimat-NodeBs, und Übertragungsschichtadresseninformationen zum Aufbauen der direkten Schnittstelle zwischen den Heimat-NodeBs.

6. Heimat-NodeB, beinhaltend:
ein Aufbaumodul (1320), konfiguriert zum Aufbauen einer Stream-Control-Transmission-Protokoll-, SCTP-, Verbindung zwischen dem Heimat-NodeB und einem Heimat-NodeB-Gateway oder einer Mobilmanagementeinheit, MME, die ein Netzwerkelement eines Kernnetzwerks ist; und
ein Erstattungsmodul (1340), konfiguriert zum Erstatten der Informationen, die zum Aufbauen einer direkten Schnittstelle zwischen den Heimat-NodeBs notwendig sind, über die vom Aufbaumodul aufgebaute SCTP-Verbindung.

7. Heimat-NodeB gemäß Anspruch 6, wobei das Erstattungsmodul Folgendes beinhaltet:
ein erstes Erstattungsuntermodul (1441), konfiguriert zum Erstatten der Informationen, die zum Aufbauen der direkten Schnittstelle zwischen den Heimat-NodeBs notwendig sind, an das Heimat-NodeB-Gateway über eine Signalisierung an einer Iuh-Schnittstelle zwischen dem Heimat-NodeB und dem Heimat-NodeB-Gateway, wenn das Heimat-NodeB ein Mobilkommunikationssystem-3G-Heimat-NodeB der dritten Generation ist.

8. Heimat-NodeB gemäß Anspruch 6, wobei das Erstattungsmodul Folgendes beinhaltet:
ein zweites Erstattungsuntermodul (1442), konfiguriert zum Erstatten der Informationen, die zum Aufbauen der direkten Schnittstelle zwischen den Long-Term-Evolution-System-, LTE-, Heimat-NodeBs notwendig sind, an das LTE-Heimat-NodeB-Gateway über eine Signalisierung an einer Sl-Schnittstelle in der LTE-Heimat-NodeB-Netzwerkarchitektur, wenn das Heimat-NodeB ein LTE-Heimat-NodeB ist, das mit einem Heimat-NodeB-Gateway eingesetzt wird.

9. Heimat-NodeB gemäß Anspruch 6, wobei das Erstattungsmodul Folgendes beinhaltet:
ein drittes Erstattungsuntermodul (1443), konfiguriert zum Erstatten der Informationen, die zum Aufbauen der direkten Schnittstelle zwischen den LTE-Heimat-NodeBs notwendig sind, an die MME, die ein Netzwerkelement eines Kernnetzwerks ist, über eine Signalisierung an einer Sl-Schnittstelle des LTE-Heimat-NodeB, wenn das Heimat-NodeB ein LTE-Heimat-NodeB ist, das ohne einem Heimat-NodeB-Gateway eingesetzt wird.

10. Heimat-NodeB gemäß einem der Ansprüche 6-9, wobei die Informationen, die zum Aufbauen der direkten Schnittstelle zwischen den Heimat-NodeBs notwendig sind, mindestens eines der Folgenden beinhaltet:
Fähigkeitsinformationen zum Aufbauen der direkten Schnittstelle zwischen den Heimat-NodeBs, und Übertragungsschichtadresseninformationen zum Aufbauen der direkten Schnittstelle zwischen den Heimat-NodeBs.

## Revendications

1. Procédé permettant de transmettre des informations requises pour établir une interface directe entre des noeuds B domestiques, comportant :
l'étape consistant à établir S602 une connexion de protocole de transmission de commande de flux, SCTP [stream control transmission protocol], entre un noeud B domestique et une passerelle de noeud B domestique ou une entité de gestion de mobiles, MME [mobile management entity], qui est un élément de réseau d'un réseau central ; et
l'étape consistant à transmettre S604, par le noeud B domestique par le biais de la connexion SCTP, les informations requises pour établir l'interface directe entre les noeuds B domestiques.

2. Procédé selon la revendication 1, dans lequel l'étape consistant à transmettre, par le noeud B domestique par le biais de la connexion SCTP, les informations requises pour établir l'interface directe entre les noeuds B domestiques comporte :
quand le noeud B domestique est un noeud B domestique du type 3G d'un système de communication mobile de 3^{e} génération, l'étape consistant à transmettre par le noeud B domestique les informations requises pour établir l'interface directe entre les noeuds B domestiques à la passerelle de noeud B domestique au moyen d'une signalisation sur une interface iuh entre le noeud B domestique et la passerelle de noeud B domestique.

3. Procédé selon la revendication 1, dans lequel l'étape consistant à transmettre, par le noeud B domestique par le biais de la connexion SCTP, les informations requises pour établir l'interface directe entre les noeuds B domestiques comporte :
quand le noeud B domestique est un noeud B domestique de système d'évolution à long terme, LTE [long term evolution system], qui est déployé avec une passerelle de noeud B domestique, l'étape consistant à transmettre par le noeud B domestique LTE les informations requises pour établir l'interface directe entre les noeuds B domestiques LTE à une passerelle de noeud B domestique LTE au moyen d'une signalisation sur une interface S1 dans l'architecture de réseau de noeuds B domestiques LTE.

4. Procédé selon la revendication 1, dans lequel l'étape consistant à transmettre, par le noeud B domestique par le biais de la connexion SCTP, les informations requises pour établir l'interface directe entre les noeuds B domestiques comporte :
quand le noeud B domestique est un noeud B domestique LTE qui est déployé sans passerelle de noeud B domestique, l'étape consistant à transmettre par le noeud B domestique LTE les informations requises pour établir l'interface directe entre les noeud B domestiques LTE à la MME qui est un élément de réseau d'un réseau central au moyen d'une signalisation sur une interface S1 du noeud B domestique LTE.

5. Procédé selon l'une quelconque des revendications 1 à 4, dans lequel les informations requises pour établir l'interface directe entre les noeuds B domestiques comportent au moins des informations parmi les suivantes :
des informations d'aptitude permettant d'établir l'interface directe entre les noeuds B domestiques, et des informations d'adresses de couches de transmission permettant d'établir l'interface directe entre les noeuds B domestiques.

6. Noeud B domestique, comportant :
un module d'établissement (1320), configuré pour établir une connexion de protocole de transmission de commande de flux, SCTP [stream control transmission protocol], entre le noeud B domestique et une passerelle de noeud B domestique ou une entité de gestion de mobiles, MME [mobile management entity], qui est un élément de réseau d'un réseau central ; et
un module de transmission (1340) configuré pour transmettre les informations requises pour établir une interface directe entre les noeuds B domestiques par le biais de la connexion SCTP établie par le module d'établissement.

7. Noeud B domestique selon la revendication 6, dans lequel le module de transmission comporte :
un premier sous-module de transmission (1441), configuré pour transmettre les informations requises pour établir l'interface directe entre les noeuds B domestiques à la passerelle de noeud B domestique au moyen d'une signalisation sur une interface iuh entre le noeud B domestique et la passerelle de noeud B domestique quand le noeud B domestique est un noeud B domestique du type 3G d'un système de communication mobile de 3^{e} génération.

8. Noeud B domestique selon la revendication 6, dans lequel le module de transmission comporte :
un deuxième sous-module de transmission (1442), configuré pour transmettre les informations requises pour établir l'interface directe entre les noeuds B domestiques de système d'évolution à long terme, LTE [long term evolution system], à la passerelle de noeud B domestique LTE au moyen d'une signalisation sur une interface S1 dans l'architecture de réseau de noeuds B domestiques LTE quand le noeud B domestique est un noeud B domestique LTE qui est déployé avec une passerelle de noeud B domestique.

9. Noeud B domestique selon la revendication 6, dans lequel le module de transmission comporte :
un troisième sous-module de transmission (1443), configuré pour transmettre les informations requises pour établir l'interface directe entre les noeuds B domestique LTE à la MME qui est un élément de réseau d'un réseau central au moyen d'une signalisation sur une interface S1 du noeud B domestique LTE quand le noeud B domestique est un noeud B domestique LTE qui est déployé sans passerelle de noeud B domestique.

10. Noeud B domestique selon l'une quelconque des revendications 6 à 9, dans lequel les informations requises pour établir l'interface directe entre les noeuds B domestiques comportent au moins des informations parmi les suivantes :
des informations d'aptitude permettant d'établir l'interface directe entre les noeuds B domestiques, et des informations d'adresses de couches de transmission permettant d'établir l'interface directe entre les noeuds B domestiques.
